# DEMANDE DE BREVET EUROPEEN

(11) **EP 4 844 964 A1**
(43) Date de publication de la demande: **25.11.2026**
(21) Numéro de dépôt: 26180190.6
(22) Date de dépôt: 21.05.2026
(51) Int. Cl.: H02G 3/04

(54) **STRUCTURE MODULABLE ET DÉMONTABLE**

(30) Priorité: 23.05.2025 FR 2505591
(71) Demandeur: PROPERPHI, 44360 Saint-Etienne-de-Montluc (FR)
(72) Inventeur: BOHADAS, Philippe, 44880 SAUTRON (FR)
(74) Mandataire: Oak & Fox

(57) **Abrégé**

L'invention concerne une structure modulable et démontable de recharge d'au moins un véhicule électrique, comportant :
• au moins un support de borne (23) étant configuré pour supporter une borne de recharge (10) d'un véhicule électrique;
• au moins deux unités de logement (30) configurées pour loger au moins partiellement une pluralité de câbles électriques destinés à alimenter ladite borne de recharge (10) en électricité, au moins une unité de logement (30) étant configurée pour être reliée mécaniquement au support de borne (20) ;
• au moins un module de liaison (41) configuré pour loger au moins partiellement ladite pluralité de câbles électriques, et configuré pour être interposé entre les deux unités de logement (30) ;
la structure étant apte à être installée dans une configuration montée modulable et démontable.

## Description

### Domaine de l'invention

Le domaine de l'invention se rapporte au domaine des structures modulables/ajustables et démontables.

En particulier, le domaine de l'invention se rapporte au domaine des structures adaptées pour supporter, loger et protéger des équipements électriques, tels que des équipements d'alimentation et des câbles électriques.

Plus particulièrement, le domaine de l'invention se rapporte au domaine des structures de recharge d'équipements électriques, tels que des véhicules électriques, des installations électriques, ou encore des structures photovoltaïques.

### État de la technique

On connaît dans l'état de la technique des structures de recharge pour véhicules électriques.

De telles structures sont généralement installées au moyen de structures fixes reposant sur des fondations enterrées, telles que des fondations en béton, ou des fondations hors sol limitant le type de matériel pouvant être installé.

Toutefois, ces solutions de l'état de la technique présentent plusieurs inconvénients.

D'une part, leur mise en oeuvre requiert des travaux de génie civil souvent lourds, longs, et coûteux, manque d'évolutivité.

De tels travaux peuvent être source de nuisances, nécessiter des autorisations administratives spécifiques, et présenter un impact environnemental non négligeable.

De plus, une fois installées, ces fondations pérennes limitent toute adaptation ultérieure de l'installation, par exemple en cas de réorganisation du site ou d'évolution des besoins.

Typiquement, les solutions de l'état de la technique ne sont pas adaptées pour mettre en place des installations temporaires, par exemple dans le cadre d'évènements ponctuels, tels que des festivals.

En outre, dans ce type d'installations, le raccordement électrique jusqu'aux bornes de recharge engendre des coûts importants, notamment en main-d'oeuvre en raison de la complexité technique de l'installation, mais également de la complexité de mise en œuvre d'opérations de maintenance, du fait notamment d'un accès difficile aux équipements, tels que les câbles électriques.

La présente invention propose une solution de d'infrastructure électrique visant au moins à limiter les inconvénients précités.

### Résumé de l'invention

Selon un premier aspect, l'invention concerne une structure modulable et démontable telle que définie par les revendications.

Notamment, elle comporte :
- au moins un support étant configuré pour supporter au moins un équipement électrique ;
- au moins une unité de logement configurée pour loger au moins partiellement une pluralité de câbles destinés à alimenter l'équipement électrique en électricité, au moins une unité de logement étant configurée pour être reliée mécaniquement au support ;
- au moins un module de liaison configuré pour loger au moins partiellement ladite pluralité de câbles, et configuré pour être interposé entre les deux unités de logement ;
caractérisée en ce que la structure est apte à être installée dans une configuration montée modulable et démontable dans laquelle le support de supporte l'équipement électrique, et dans laquelle l'unité de logement et le module de liaison logent au moins partiellement la pluralité de câbles, au moins une unité de logement étant reliée mécaniquement au support.

Selon un autre aspect, l'invention concerne une structure modulable et démontable de recharge d'au moins un équipement électrique.

Selon un autre aspect, l'invention concerne une structure modulable et démontable de recharge d'au moins un véhicule électrique.

Selon un autre aspect, l'invention concerne une structure modulable et démontable de recharge d'au moins un véhicule électrique, comportant :
- au moins un support de borne étant configuré pour supporter une borne de recharge d'un véhicule électrique ;
- au moins une unité de logement configurée pour loger au moins partiellement une pluralité de câbles électriques destinés à alimenter ladite borne de recharge en électricité, et configurée pour être reliée mécaniquement au support de borne ;
- au moins un module de liaison configuré pour loger au moins partiellement ladite pluralité de câbles électriques ;
la structure étant caractérisée en ce qu'elle est apte à être installée dans une configuration montée modulable et démontable dans laquelle le support de borne supporte la borne de recharge d'un véhicule électrique, et dans laquelle l'unité de logement et le module de liaison logent au moins partiellement la pluralité de câbles électriques, au moins une unité de logement étant reliée mécaniquement au support de borne.

Selon un mode de réalisation, la structure comporte au moins deux unités de logement, le module de liaison étant interposé entre les deux unités de logement.

Selon un mode de réalisation, le support est configuré pour supporter une armoire électrique.

Selon un mode de réalisation, le support est configuré pour supporter au moins deux bornes de recharge de véhicules électriques.

Un bénéfice particulier est de permettre de recharger des véhicules électriques de deux zones d'emplacements de stationnement distincts, lorsque la structure forme par exemple une zone de séparation desdites zones d'emplacement de stationnement.

Selon un mode de réalisation, le support comprend au moins deux ouvertures de passage de câbles.

Elles sont par exemple ménagées dans une paroi du support.

Selon un mode de réalisation, au moins deux ouvertures de passage de câbles sont ménagées dans la paroi du support de borne de sorte à permettre de modifier une trajectoire de cheminement des câbles.

Elles sont par exemple ménagées sur des portions de parois qui ne se trouvent pas en regard l'une de l'autre, par exemple des parois ou des portions adjacentes d'une même paroi.

Selon un mode de réalisation, la structure comporte en outre un ensemble d'ancrage comportant au moins un élément d'ancrage de la structure sur un support, au moins une unité de logement et/ou le support comportant en outre au moins un logement apte à coopérer avec ledit élément d'ancrage.

Un bénéfice est d'améliorer la stabilité et la résistance aux efforts de la structure lorsqu'elle se trouve dans une configuration montée.

Selon un mode de réalisation, l'ensemble d'ancrage comprend des moyens d'ancrage au sol comportant au moins une vis de fondation.

Un bénéfice est de renforcer la stabilité de la structure lorsqu'elle est installée dans la configuration montée.

Selon un mode de réalisation, au moins une unité de logement et/ou le module de liaison comprend un guide de la pluralité de câbles électriques, et comporte en outre un organe de séparation des câbles de courants faible des câbles de puissance.

Selon un mode de réalisation, la structure comprend au moins deux unités de logement comportant chacune au moins une extrémité apte à coopérer mécaniquement avec le module de liaison, ledit module de liaison étant apte à être déplacé d'une première position dans laquelle une distance entre lesdites extrémités est minimale vers une deuxième position dans laquelle une distance entre lesdites extrémités est maximale, et étant apte à être déplacé de la deuxième position vers la première position.

Selon un mode de réalisation, au moins une unité de logement 30, 30' est configurée pour coulisser à l'intérieur du module de liaison 40.

Cela permet d'adapter la longueur d'une unité de logement en fonction du cas d'usage.

Un bénéfice est de permettre d'adapter l'agencement de la structure en fonction des contraintes liés à l'environnement de son installation dans une configuration montée.

Selon un mode de réalisation, la structure comporte au moins une pièce de rattrapage de niveau étant apte à supporter le support dans la configuration montée de la structure.

Un bénéfice est de permettre d'installer la structure dans une configuration montée dans des environnements dont les caractéristiques ne sont pas optimales pour une telle installation.

Selon un mode de réalisation, la structure comporte un ensemble de protection comportant au moins une pièce d'habillage étant apte à être reliée mécaniquement à au moins une unité de logement et/ou au module de liaison.

Un bénéfice est de limiter les risques de pannes, d'accidents, ainsi que les coûts liés à la maintenance.

Selon un mode de réalisation, l'ensemble de protection comporte des moyens de verrouillage de la pièce d'habillage.

Un bénéfice est de renforcer la protection de l'installation électrique, et donc de limiter encore davantage les risques de pannes, d'accidents, et les coûts liés à la maintenance.

Selon un mode de réalisation, la structure comporte une borne de recharge d'un véhicule électrique.

Selon un mode de réalisation, la structure comporte au moins deux modules de liaison, et comporte en outre au moins trois unités de logement, la structure étant apte à être installée dans une configuration montée dans laquelle un premier module de liaison est interposé entre une première unité de logement et une deuxième unité de logement, et dans laquelle un deuxième module de liaison est interposé entre la deuxième unité de logement et une troisième unité de logement.

Un bénéfice est de permettre d'installer la structure dans un environnement éloigné d'un point d'accès au réseau électrique.

Selon un mode de réalisation, la structure comporte au moins une pièce de réglage de l'agencement relatif d'au moins une unité de logement par rapport au module de liaison.

Selon un mode de réalisation, la structure comporte au moins une pièce de rattrapage de niveau configurée pour permettre d'ajuster le niveau de la structure par rapport à un support sur lequel repose au moins partiellement ladite structure dans la configuration montée.

Selon un mode de réalisation, le support comprend un plateau de support interchangeable avec un autre plateau de support adapté pour supporter un équipement électrique de différent.

Il s'agit par exemple d'un support de borne configuré pour supporter une borne de recharge de véhicules électriques interchangeable avec un autre plateau configuré pour supporter une borne de recharge différente.

Selon un mode de réalisation, la structure comporte un ensemble de protection comportant au moins une pièce amovible d'accès à la pluralité de câbles électriques.

Selon un mode de réalisation, l'ensemble de protection comporte des moyens de verrouillage de la pièce amovible d'accès à la pluralité de câbles électriques.

Selon un mode de réalisation, la structure comporte une pluralité de supports de bornes de recharge d'un véhicule électrique.

Selon un mode de réalisation, au moins une unité de logement et/ou le module de liaison comprend au moins un guide de la pluralité de câbles électriques.

Un bénéfice est de permettre d'optimiser le cheminement des câbles dans la configuration montée.

Selon un mode de réalisation, les unités de logement et le module de liaison comprennent chacun au moins deux compartiments distincts de logement de câbles électriques.

Un bénéfice est d'adapter la structure à des besoins différents d'apport en énergie électrique liés à des cas d'usage.

Selon un mode de réalisation, la structure est installée dans la configuration montée modulable et démontable.

Selon un mode de réalisation, la structure comporte au moins un matériau isolant, par exemple du bois.

Selon un mode de réalisation, la structure comporte au moins un matériau métallique, par exemple de l'acier.

Ces matériaux sont susceptibles de composer au moins partiellement chacun des différents modules de la structure, selon les modes de réalisation.

Selon un mode de réalisation, le support comprend une pluralité d'ouvertures de passage de câbles, lesdites ouvertures étant agencés sur des faces adjacentes du support.

Un bénéfice est de pouvoir modifier la trajectoire des câbles électriques, par exemple selon un changement de trajectoire à 90°.

Il est par exemple positionné en une extrémité d'une unité de logement.

Il est par exemple relié à une extrémité d'une unique unité de logement.

Ainsi, il forme par exemple un élément final de cheminement des câbles.

Selon un mode de réalisation, la structure est installée dans une zone de stationnement de véhicules comportant des emplacements de stationnement de véhicules se trouvant en regard les uns des autres, au moins une unité de logement étant interposée entre lesdites places en regard.

Un bénéfice est de permettre de créer une délimitation entre les deux zones de stationnements se faisant face, et d'installer au moins deux bornes de recharge dos à dos pour alimenter les véhicules stationnant dans chacune des zones se faisant face.

Selon un mode de réalisation, la structure est installée dans une zone de stationnement de véhicule comportant une pluralité d'emplacements de stationnement de véhicules, le support étant installée à une extrémité d'un emplacement de stationnement.

Un bénéfice est d'optimiser l'agencement de la structure dans un environnements présentant des contraintes spécifiques.

Selon un autre aspect, l'invention concerne un kit de montage d'une structure de recharge d'au moins un véhicule électrique comportant :
- au moins un support étant configuré pour supporter au moins un équipement électrique ;
- au moins une unité de logement configurées pour loger au moins partiellement une pluralité de câbles électriques destinés à alimenter l'équipement électrique en électricité, au moins une unité de logement étant configurée pour être reliée mécaniquement au support ;
- au moins un module de liaison configuré pour loger au moins partiellement ladite pluralité de câbles électriques ;
- au moins un élément d'ancrage au sol de la structure.

### Brève description des figures

D'autres caractéristiques et avantages de l'invention ressortiront à la lecture de la description détaillée qui suit, en référence aux figures annexées qui illustrent :
Figure 1 : une vue schématique illustrant un mode de réalisation de la structure modulaire démontable dans une configuration installée ;
Figure 2 : une vue schématique du support apte à supporter la borne de recharge de véhicule ;
Figure 3 : une vue schématique d'un support, des unités de logement et des moyens d'ancrage ;
Figure 4 : une vue schématique d'une unité de logement relié à un support ;
Figure 5 : une vue schématique d'une unité de logement, dans un mode de réalisation dans lequel elle comprend une pièce de sécurisation de l'ancrage de la structure.
Figure 6 : une vue schématique du support apte à supporter un équipement électrique, dans un mode de réalisation dans lequel il comprend un plateau interchangeable ;
Figure 7 : une vue en perspective d'une structure conforme à l'invention, mise en oeuvre dans un parking à proximité d'une route, dans un mode de réalisation dans lequel elle comprend une pluralité d'unités de logement adjacentes et une pluralité de supports.
Figure 8 : une vue schématique d'une pièce de réglage de la structure.
Figure 9: une vue en perspective d'une variante de réalisation d'une installation conforme à l'invention, mise en œuvre dans un parking.
Figure 10 : une vue en perspective d'éléments de l'installation en cours d'assemblage par une personne, sur un parking.
Figure 11 : une représentation en perspective d'un support d'équipement électrique selon un mode de réalisation avantageux de l'invention.
Figure 12 : une vue schématique d'une pièce de raccordement d'un support d'équipement électrique et d'une ligne d'éléments, le support d'équipement électrique étant positionné à un niveau différent de celui de la ligne.

### Description détaillée de l'invention

### Généralités et définitions

Plusieurs définitions de termes utilisés dans la présente description sont données ci-après.

Ces définitions ne doivent pas être interprétées comme strictement limitatives de la portée de l'invention. Elles visent à introduire des notions et à contextualiser des termes utilisés dans la présente description détaillée.

L'invention concerne une structure modulable et démontable 100 de recharge d'équipements électriques.

Pour des raisons de concisions, elle est également dénommée « la structure 100 » dans la suite de la présente description détaillée.

On appelle « structure modulable » une structure comportant une pluralité d'éléments (également appelés « pièces », « composants » ou « modules » dans la présente description) pouvant être, selon les modes de réalisation, interchangeables, réglables, remplacés et/ou supprimés dans la configuration montée de la structure 100.

Cela permet de faire varier l'agencement dans l'espace, la configuration, la forme, et/ou les dimensions de ladite structure 100.

Cela permet notamment de faire varier le nombre et la nature des composants de la structure 100, ou encore de faire varier des distances ou des angles entre plusieurs de ces composants.

Un bénéfice est de permettre une installation de la structure 100 dans des configurations montées variées répondants à des contraintes liées à des cas d'usage multiples.

Des exemples de cas d'usages seront décrits plus loin dans la présente description.

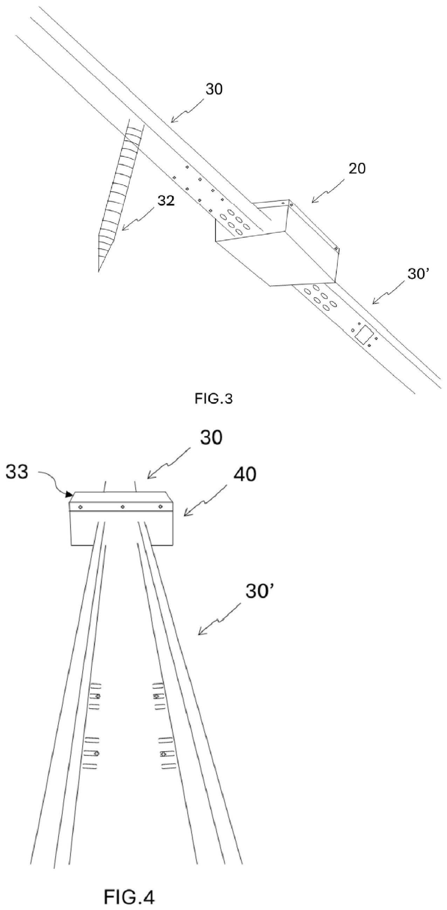

Dans des modes de réalisation, comme représenté sur la figure 3, la structure 100 comprend au moins un élément de support, de liaison, de fixation, d'ancrage au sol, et/ou de mise à niveau d'au moins un élément de la structure 100, par exemple au moins un support 20 de matériel électrique.

Cela permet une modularité de la structure 100, tel que cela a été défini précédemment.

Cela permet également une bonne tenue mécanique des composants de la structure 100 entre eux.

On appelle structure « démontable » une structure comportant une pluralité d'éléments reliés mécaniquement entre eux par l'intermédiaire de moyens de fixation non permanents, ou amovibles, et/ou par l'intermédiaire d'autres composants de la structure 100.

Cela permet d'installer la structure dans une configuration dite « montée », de telle manière que la structure 100 peut-être au moins partiellement démontée ou modifiée sans en endommager ses composants, ou en en limitant l'endommagement, et tout en déployant des efforts limités.

Des exemples de tels moyens de liaisons non-permanents, ou amovibles, comprennent, à titre non limitatif :
- des liaisons par l'intermédiaire d'un élément mâle et d'un élément femelle, de dimensions proches permettant une liaison mécanique non-permanente, et/ou,
- des éléments de liaison coulissants, par exemple au moins un guide ou un rail, et/ou,
- des vis et/ou des boulons et/ou des écrous et/ou des cales, et/ou des éléments de liaison adhésifs, permettant par exemple de relier des parois de différents composants de la structure 100 entre elles,
- au moins un élément d'ancrage non-permanent, ou amovible, de la structure sur un support, qui est par exemple le sol ou tout autre support intermédiaire. Un exemple d'un tel élément d'ancrage comprend par exemple au moins une vis de fondation ;
- tout autre élément de liaison mécanique non permanent pertinent permettant d'installer la structure 100 dans au moins une configuration montée stable non-permanente, c'est-à-dire modulable et démontable.

Dans le contexte de la présente invention, l'expression « relié mécaniquement » ne doit pas être interprétée comme étant limitative à une liaison mécanique directe entre des composants de la structure 100.

Ainsi, selon les modes de réalisation, l'expression « configuré pour être relié mécaniquement » signifie :
- soit que des composants de la structure 100 sont configurés pour être reliés entre eux par une liaison directe, par exemple par une liaison mécanique directe des parois de deux composants de la structure au moyen d'un élément de fixation amovible ;
- soit que des composants de la structure 100 sont configurés pour être reliés entre eux par l'intermédiaire d'une ou plusieurs pièces de liaison, qui peut être un composant identique de la structure 100, ou encore un composant de la structure 100 de nature différente, ou encore un élément externe à la structure 100.

On entend par « câbles de courant faible » des câbles permettant de véhiculer des données, tels que des câbles RJ45, des câbles RS485, etc.

On entend par « câbles de puissance » des câbles destinés à transporter de l'énergie électrique à des niveaux de tensions et de courant élevé, par exemple supérieure à deux cents volts et plusieurs dizaines d'ampères.

Ces valeurs sont données à titre d'exemple non-limitatifs de l'invention.

La structure 100 comporte une pluralité d'éléments, ou modules, étant configurés pour être reliés mécaniquement entre eux de sorte à permettre une installation » de la structure 100 dans la configuration montée.

Cette configuration « montée » est donc une configuration démontable et modulable, comme ces termes ont été définis précédemment.

Selon un mode de réalisation, la structure 100 est installée dans la configuration « montée ».

La structure 100 étant modulaire, elle est configurée pour être installée dans des « configurations montées » différentes, que cela soit en termes de composants, et de nombre de chacun de ces composants, ou en termes d'agencement relatifs de ces différents composants.

Un bénéfice est de permettre de fournir une structure adaptée à des contraintes spatiales et/ou environnementales et/ou de besoin d'apport en énergie électrique liées à des cas d'usages différents et/ou évolutifs.

Par exemple, la structure 100 est particulièrement adaptée pour être installée dans sa configuration montée dans des environnements accueillant des évènements ponctuels, tels que des festivals, ou encore des environnements dans lesquels les besoins d'apports en énergie électrique ne sont pas constants en fonction des périodes de l'année, par exemple des campings, ou tout autre site accueillant ponctuellement du public.

L'invention ne se limite pas à une structure configurée pour être installée dans un environnement particulier.

Ces derniers sont donnés à titre d'exemples non-limitatifs.

### Support(s) d'équipement électrique 20 pouvant accueillir une borne de recharge ou une armoire électrique

La structure 100 peut être une structure « de recharge de véhicule électrique » en ce qu'elle comporte au moins un support d'équipement électrique 20 étant configuré pour supporter au moins une borne de recharge d'au moins un véhicule électrique.

Selon un mode de réalisation, la structure 100 comprend au moins un support d'équipement électrique 20 configuré pour supporter une armoire électrique.

Selon un mode de réalisation, la structure 100 comprend au moins un support d'équipement électrique configuré pour supporter une pluralité de bornes de recharge de véhicules électriques.

Selon un mode de réalisation, la structure 100 comporte au moins une borne de recharge de véhicule électrique.

Dans certains modes de réalisation, la structure 100 comporte une pluralité de bornes de recharge d'au moins un véhicule électrique.

Elle comporte par exemple deux bornes de recharge, trois bornes de recharge, ou encore un nombre supérieur de bornes de recharge.

Dans certains modes de réalisation, la structure 100 comporte une pluralité de supports de bornes 20 de recharge d'au moins un véhicule électrique.

Elle comporte par exemple deux supports 20 de bornes de recharge, trois supports 20 de bornes de recharge, ou encore un nombre supérieur de supports 20 de bornes de recharge.

L'invention ne se limite pas à un intervalle donné pour le nombre de supports 20 de borne de recharge, ou pour le nombre de de bornes de recharge.

Cela s'applique à l'ensemble des composants de la structure 100.

Un intérêt de l'invention est justement de proposer une structure démontable et modulable répondant à des contraintes spécifiques liées à différents cas d'usages.

Selon différents modes de réalisation, le nombre de composants de la structure 100 et/ou leur agencement relatif est donc variable.

Selon un mode de réalisation, la structure 100 est configurée pour être installée dans une pluralité de configurations montées différentes.

Il faut comprendre par « configurations montées différentes » que le nombre de composants de la structure 100 et/ou la nature de ces composants, et/ou l'agencement relatif de ces composants, et/ou le nombre d'éléments de liaison ou de fixation amovibles reliant mécaniquement ces composants entre eux, sont différents pour chacune des « configurations montées différentes ».

### Unités de logement de réseau et d'équipements électriques /câbles électriques 30

La structure 100 comporte au moins une unité de logement 30.

Selon un mode de réalisation, la structure 100 comprend au moins une unité de logement additionnelle 30'.

L'unité de logement 30 permet de loger les réseaux (courant faible et/ou courant fort) d'une pluralité de câbles.

Selon un mode de réalisation, au moins une unité de logement 30, 30' comprend une paroi délimitant un volume au sein duquel les câbles électriques peuvent êtres agencés.

Dans certains modes de réalisation, ce volume peut être un espace partiellement délimité, c'est-à-dire que la paroi ne n'entoure que partiellement les câbles.

Elle forme par exemple un guide de l'agencement de ces câbles électriques.

La pluralité de câbles électriques est destinée à alimenter la borne de recharge 10 en électricité.

Elle est par exemple connectée à un point d'accès au réseau électrique, par exemple depuis une armoire électrique, qui peut être agencée sur un support 20, ou un local technique.

Selon un mode de réalisation, la structure 100 comprend la pluralité de câbles.

Au moins une unité de logement 30 est configurée pour être reliée mécaniquement, directement ou indirectement comme cela a été défini précédemment, avec au moins un support 20 d'équipement électrique (borne de recharge ou armoire électrique).

Selon un mode de réalisation, les dimensions des unités de logement 30 sont adaptées pour permettre de loger une pluralité de câbles électriques.

Selon un exemple de réalisation non-limitatif, elles sont adaptées pour permettre de loger onze câbles de section supérieure à deux cents millimètres carrés.

Cela est par exemple permis par des configurations différentes de la paroi délimitant le volume accueillant les câbles électriques.

Ces configurations différentes sont par exemple des formes de la paroi, ou encore des dimensions de la paroi.

Selon d'autres modes de réalisation, les dimensions des unités de logement 30 sont adaptées pour permettre de répondre aux besoins d'apport en énergie requis en fonction des cas d'usage, et donc à la quantité de câbles requis et à leurs dimensions spécifiques.

Selon d'autres modes de réalisation, les dimensions des unités de logement 30 et/ou leur nombre sont adaptées pour permettre de répondre à des contraintes de terrain, c'est-à-dire des contraintes liées à la zone d'installation de la structure 100.

Par exemple, dans un mode de réalisation, les dimensions des unités de logement et leur nombre sont adaptées pour permettre une installation de la structure 100 à proximité d'une zone de stationnement de véhicule en permettant de recharger au moins un véhicule stationné dans ladite zone de stationnement.

Dans une telle configuration, les longueurs respectives des unités de logement 30 et leur nombre sont par exemple adaptés pour permettre de loger les câbles électriques alimentant la borne de recharge sur une distance séparant ladite borne de recharge d'un point de départ des câbles, par exemple une armoire de distribution ou un local technique.

Dans certains modes de réalisation, au moins une dimension d'au moins une unité de logement 30, 30' est inférieure à au moins une dimension d'au moins un élément de terrain.

Dans un exemple illustratif, la hauteur des unités de logement 30, 30' est inférieure à la hauteur d'un trottoir adjacent à une pluralité de zones de stationnement de véhicules.

Cela permet de réduire les risques d'endommagement de ces unités de logement 30, 30'.

Cela permet également de réduire les contraintes liées à l'occupation de l'espace pour des piétons, ou le risque d'incident pour ces derniers, tel qu'une chute.

Dans certains modes de réalisation, les unités de logement 30, 30' sont configurées pour être installée sur un support plat, par exemple le sol.

Dans ce cas, elles forment par exemple une délimitation entre deux zones distinctes, par exemple deux zones de stationnement de véhicules distinctes.

Selon un mode de réalisation, au moins une unité de logement 30 est au moins partiellement de forme à base rectangulaire, ou une forme sensiblement proche.

Selon un mode de réalisation, au moins une unité de logement 30, 30' forme un carter formant un guide pour les câbles électriques.

Dans d'autres modes de réalisation, au moins une unité de logement est au moins partiellement de forme sensiblement tubulaire, elliptique, polyédrique, ou au moins partiellement de toute autre forme adaptée au cas d'usage.

Selon un mode de réalisation, la hauteur d'au moins une unité de logement 30, 30' est comprise entre cent millimètres et deux cents millimètres.

Selon un mode de réalisation, la hauteur d'au moins une unité de logement 30, 30' est comprise entre cinq millimètres et cinquante millimètres.

Selon un mode de réalisation, la hauteur d'au moins une unité de logement 30, 30' est comprise entre cent millimètres et cent-cinquante millimètres.

Selon un mode de réalisation, la hauteur d'au moins une unité de logement 30, 30' est comprise entre cent millimètres et cent-vingt millimètres.

Selon un mode de réalisation, la longueur d'au moins une unité de logement 30, 30' est comprise entre un mètre et trois mètres.

Selon un mode de réalisation, la longueur d'au moins une unité de logement 30, 30' est comprise entre deux mètres et trois mètres.

Selon un mode de réalisation, la longueur d'au moins une unité de logement 30, 30' est comprise entre deux mètres cinquante et trois mètres.

Selon un mode de réalisation, la largeur d'au moins une unité de logement 30, 30' est comprise entre cent millimètres et quatre cents millimètres.

Selon un mode de réalisation, la largeur d'au moins une unité de logement 30, 30' est comprise entre cent millimètres et trois cents millimètres.

Selon un mode de réalisation, la largeur d'au moins une unité de logement 30, 30' est comprise entre cent millimètres et deux cents millimètres.

Selon un mode de réalisation, au moins une unité de logement 30, 30' est configurée pour permettre de loger une pluralité de câbles électriques de sections respectives comprises entre deux cents millimètres carrés et trois-cent cinquante millimètres carrés.

Selon un mode de réalisation, au moins une unité de logement 30, 30' comprend une paroi s'allongeant selon un axe délimitant un volume, une section transversale de la paroi selon ledit axe étant au moins trois fois supérieure à la section de passage des câbles électriques.

Un bénéfice est de permettre de respecter certaines exigences normatives.

Selon un mode de réalisation, au moins une unité de logement 30, 30' comprend une première ouverture et une deuxième ouverture.

Ces ouvertures sont par exemple ménagées sur une ou plusieurs parois de l'unité de logement 30.

Un bénéfice est de permettre de faire entrer les câbles électriques au sein d'un volume délimité par les parois de l'unité de logement 30, 30' par la première ouverture, et de les faire sortir par la deuxième ouverture.

Selon un mode de réalisation, au moins une unité de logement 30, 30' est configurée pour être reliée mécaniquement avec au moins une autre unité de logement 30.

Selon un mode de réalisation, la structure 100 comprend un nombre d'unité de logement 30, 30' suffisant pour loger la pluralité de câbles électriques sur une distance séparant au moins une borne de recharge 10 d'au moins un véhicule électrique d'un point d'accès au réseau électrique.

Selon un mode de réalisation, la structure 100 comprend un nombre de composants suffisant pour loger la pluralité de câbles électriques sur une distance séparant au moins une borne de recharge 10 d'au moins un véhicule électrique d'un point d'accès au réseau électrique.

### Module(s) de liaison 40

La structure 100 comprend au moins un module de liaison 40.

Le module de liaison 40 est configuré pour loger la pluralité de câbles électriques.

Il est par exemple configuré pour entourer au moins partiellement une portion des câbles électriques.

Le module de liaison 40 est configuré pour permettre de relier mécaniquement au moins deux unités de logement 30 entre elles.

Cela permet d'installer la structure 100 dans la configuration montée avec une bonne tenue mécanique entre ses composants et une bonne stabilité.

Un autre bénéfice est de permettre de loger les câbles électriques sur une plus grande distance.

Cela permet notamment d'installer la structure 100 dans des zones plus éloignées d'un point d'accès au réseau électrique.

Cela permet également de répondre à des contraintes de terrain spécifiques liées au cas d'usage.

Selon un mode de réalisation, le module de liaison 40 comprend une paroi délimitant un volume au sein duquel les câbles électriques peuvent êtres agencés.

Dans certains modes de réalisation, ce volume peut être un espace partiellement délimité, c'est-à-dire que la paroi ne n'entoure que partiellement les câbles électriques.

Elle forme par exemple un guide de l'agencement de ces câbles électriques.

Ce volume est par exemple interposé entre deux volumes délimités par des parois de deux unités de logement 30, 30' distincte, dans une configuration montée de la structure 100.

Selon un mode de réalisation, la structure 100 comprend une pluralité de modules de liaison 40.

Un bénéfice est de permettre de loger les câbles électriques sur une distance plus grande.

Selon un mode de réalisation, au moins une ouverture est ménagée dans la paroi du module de liaison 40.

Un bénéfice est de définir un espace de passage pour les câbles électriques, par exemple vers un autre composant de la structure 100.

Selon un exemple de réalisation, la paroi du module de liaison 40 comprend au moins une première face et une deuxième face étant distinctes, une première ouverture étant ménagée dans la première face et une deuxième ouverture étant ménagée dans la deuxième face.

La première face et la deuxième face sont, par exemple, des faces opposées du module de liaison 40.

Un intérêt est de permettre un agencement tel que la première ouverture se trouve en regard de la deuxième ouverture dans la configuration montée.

Cela permet également de protéger une portion plus importante de la pluralité de câbles électriques étant logés par le module de liaison 40.

Cela permet également de limiter le besoin de torsion des câbles électriques, dans une configuration installée de la structure 100.

Un intérêt est de réduire le risque d'endommagement de ces derniers pouvant conduire à un défaut électrique.

### Ensemble de protection et moyens de verrouillage, moyens d'accès amovibles au câbles, protection des câbles de courant faible

Selon un mode de réalisation, la structure 100 comprend un ensemble de protection 33, comme représenté sur la figure 4.

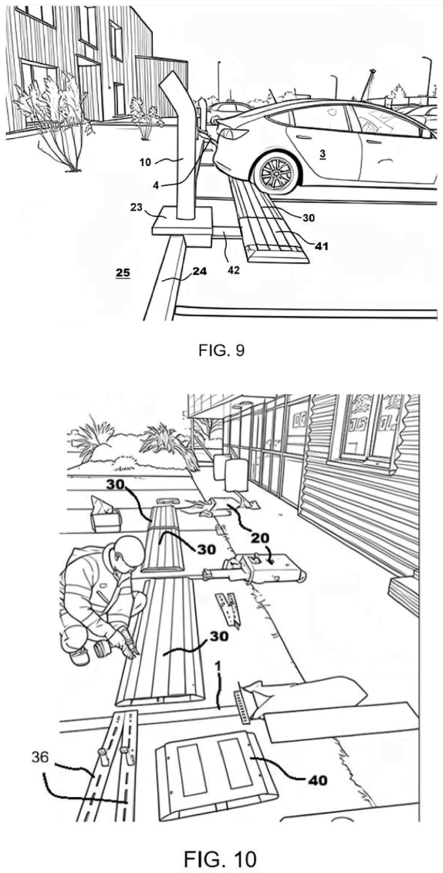

Selon un mode de réalisation, comme cela est représenté sur la figure 9, la structure 100 comprend une pièce de réglage 36 d'une longueur séparant au moins deux composants de la structure 100.

Selon un mode de réalisation, la pièce de réglage 36 est configuré pour régler une longueur d'au moins une unité de logement 30, 30'.

Elle permet par exemple de régler la distance sur laquelle l'unité de logement protège les câbles électriques entre un module de liaison 40 et un autre module de liaison 40, ou encore entre un module de liaison 40 et un support 20.

Un bénéfice est de permettre de s'adapter à différents environnements d'installation, par exemple de régler les distances entre les composants en fonction des largeurs des places de stationnement de véhicule.

Un autre bénéfice est de permettre de rigidifier l'installation.

Selon un mode de réalisation, l'ensemble de protection comprend un premier capot supérieur. Ce premier capot supérieur s'allonge par exemple selon une direction d'allongement des câbles électriques.

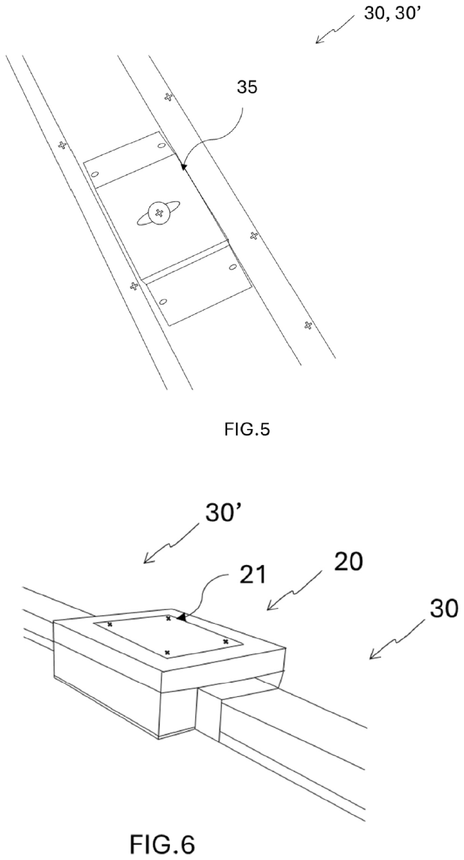

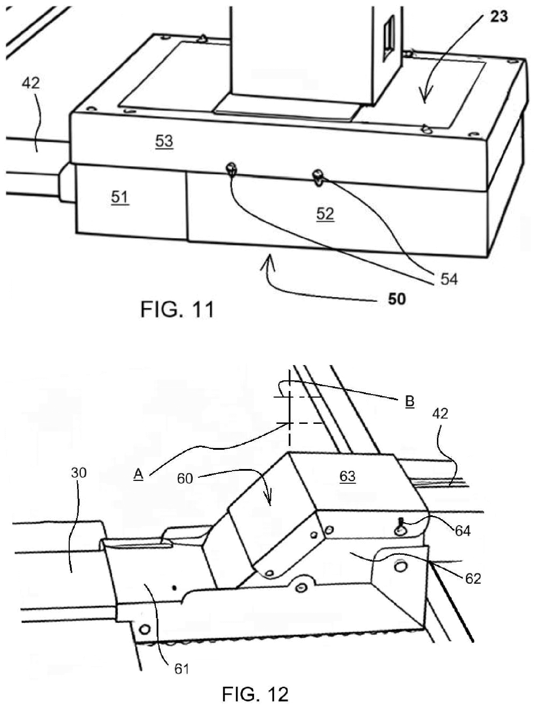

Selon un mode de réalisation, l'ensemble de protection comporte un deuxième capot supérieur 21 recouvrant au moins partiellement le premier capot supérieur (voir sur les figures 6 et 11).

Selon un mode de réalisation, le deuxième capot supérieur s'allonge par exemple selon une direction sensiblement parallèle à la direction d'allongement du premier capot supérieur. Il est par exemple adjacent à un composant de la structure, par rapport au support, comme cela est représenté sur la figure 6.

Une telle configuration permet d'intervenir sur les câbles électriques et/ou sur des éléments de fondation par déverrouillage du deuxième capot, puis du premier capot.

Dans cette configuration, le deuxième capot permet par exemple de verrouiller le premier capot.

Un bénéfice est de sécuriser davantage l'installation, et de faciliter les interventions de maintenance.

Selon un mode de réalisation, l'ensemble de protection 33 comporte au moins une pièce d'habillage configurée pour recouvrir au moins une portion des câbles électriques.

Un intérêt est de protéger une portion des câbles électriques qui ne serait pas protégée par un autre composant dans une configuration montée de la structure 100.

Selon un mode de réalisation, l'ensemble de protection 33 comprend au moins une pièce étant apte à être reliée mécaniquement à au moins une unité de logement 30, 30' et/ou au module de liaison 40.

Il s'agit par exemple de la pièce d'habillage.

Selon un mode de réalisation, comme représenté sur la figure 5, l'ensemble de protection 33 comprend au moins une pièce de sécurisation de l'ancrage 35 de la structure.

Selon un mode de réalisation, au moins une unité de logement 30, 30' comprend une pièce d'accès à la pluralité de câbles électriques.

Selon un mode de réalisation, au moins un module de liaison 40 comprend une pièce d'accès à la pluralité de câbles électriques.

Selon un mode de réalisation, au moins un support 20 de borne de recharge de véhicule électrique comprend une pièce d'accès à la pluralité de câbles électriques.

Selon un mode de réalisation, au moins une pièce d'accès à la pluralité de câbles électriques comprend des moyens d'ouverture.

Il s'agit par exemple d'un capot amovible. Il constitue par exemple une pièce agencée sur une partie supérieure d'une unité de logement 30, 30' et/ou d'un module de liaison 40 dans la configuration installée, c'est-à-dire au-dessus de la pluralité de câbles électriques.

Selon un autre exemple, une pièce amovible est agencée sur une portion latérale d'une unité de logement 30, 30' et/ou d'un module de liaison 40 dans la configuration installée.

Un bénéfice est de permettre un accès aux câbles électriques lorsque la structure 100 est installée.

Cela permet de faciliter le tirage des câbles électriques du point d'accès au réseau électrique jusqu'à la borne de recharge.

Cela permet également de faciliter les opérations de contrôle ou de maintenance de l'installation électrique.

Cela permet également un accès aux câbles sans modifier l'agencement d'autres pièces de la structure 100.

Selon un mode de réalisation, l'ensemble de protection 33 comprend des moyens de verrouillage d'au moins une pièce d'accès à la pluralité de câbles électriques.

Les moyens de verrouillage sont par exemple configurés pour limiter ou restreindre un accès à au moins un volume délimité par une paroi d'un autre composant, par exemple d'au moins une unité de logement 30, 30' ou d'au moins un module de liaison 40.

Un bénéfice est de permettre de restreindre l'accès aux câbles électriques à des personnes qualifiées, tels que des personnes habilitées à la maintenance.

Cela permet à la fois d'améliorer la sécurité de personnes non-habilitées, mais également de limiter le risque de détérioration des câbles électriques par ces personnes, ou encore par des animaux susceptibles d'endommager les câbles électriques.

Selon un exemple de réalisation, le module de liaison 40 comprend au moins une trappe verrouillable d'accès aux câbles électriques.

Selon un mode de réalisation, au moins une dimension de la paroi du module de liaison 40 est inférieure à au moins une paroi d'au moins une unité de logement 30, 30'.

Selon un exemple, la longueur d'au moins un module de liaison 40 est inférieure à la longueur d'au moins une unité de logement 30.

Un autre bénéfice est de réduire l'encombrement, c'est-à-dire le volume occupé par les composants de la structure 100, à la fois dans la configuration installée, mais également lorsque celle-ci se trouve dans une configuration au moins partiellement démontée.

Cela permet de faciliter le transport de la structure 100.

Cela permet également une plus grande modularité de la structure 100.

Selon un mode de réalisation, la structure 100 des moyens d'isolation du courant faible.

On entend par « isolation du courant faible » une séparation physique et électrique des circuits de courants faible par rapport aux circuits de de puissance.

Cela permet d'améliorer la sécurité en cas de défaut sur les circuits de puissance.

Cela permet également de prévenir les perturbations électromagnétiques.

Selon un mode de réalisation, la structure 100 comporte un module de protection électromagnétique des circuits de courant faible.

Il s'agit par exemple d'un blindage électromagnétique entourant les circuits électriques de courant faible.

Un tel module de protection forme par exemple une cage de faraday protégeant les câbles électriques de courant faible. Cette caractéristique permet également de renforcer mécaniquement le module de protection qui peut ainsi supporter de lourdes charges, comme celle d'un véhicule qui viendrait se positionner partiellement dessus.

**Modularité de la structure 100, réglage de l'agencement relatif des composants, plateau de support d'équipement(s) électrique(s) interchangeable, résistance à l'arrachement.**

Comme cela a été évoqué précédemment, la structure 100 est une structure modulaire.

Selon un mode de réalisation, au moins un composant de la structure 100 est configuré pour être interchangeable avec au moins un autre composant de la structure 100 dans la configuration montée.

Selon un exemple illustratif, une unité de logement 30, 30' de câbles électriques est configurée pour être interchangeable avec un support 20.

Selon un autre exemple illustratif, une unité de logement 30, 30' de câbles électriques est configurée pour être interchangeable avec un module de liaison 40, et/ou avec un support 20.

Cela permet une adaptation de la configuration installée à une pluralité de configurations d'usage.

Cela permet également de modifier la configuration d'une structure installée sans nécessiter de démonter l'ensemble de ses composants.

Cela permet donc un gain de temps et une réduction des coûts de main d'œuvre.

Selon un mode de réalisation, la structure 100 comporte des moyens de réglage 36 d'un agencement relatif entre au moins deux composants de la structure 100.

La structure 100 comporte par exemple un module ou une pièce de réglage 36 permettant de faire varier un tel agencement relatif.

Selon un exemple de réalisation, la structure 100 comprend des moyens de fixation amovibles configurés pour permettre le réglage de l'agencement relatif entre au moins deux composants de la structure 100.

Les moyens de fixation amovibles comprennent par exemple des moyens de fixation aptes à coopérer avec des ouvertures percées dans un composant de la structure, tels que des vis aptes à coopérer avec des ouvertures oblongues.

Selon un mode de réalisation, la structure 100 comprend un module de liaison 40 et une unité de logement 30, 30' coopérant avec ledit module de liaison 40 par l'intermédiaire d'au moins un moyen de liaison reconfigurable pour ajuster une position relative entre l'unité de logement 30, 30' et ledit module de liaison 40.

Dans un exemple non-limitatif de mise en œuvre, tel que cela est représenté sur la figure 3 la structure comporte des vis coopérant avec des ouvertures oblongues s'allongeant sur une face de l'unité de logement 30, 30'.

Selon cet exemple, l'agencement relatif du module de liaison 40 par rapport à l'unité de logement 30, 30' peut être modifié dans la configuration montée de la structure 100 en modifiant la position des vis via les ouvertures oblongues.

Cela permet par exemple d'ajuster la configuration de la structure 100 à des zones de stationnement de véhicules comprenant des emplacements de dimensions différentes.

Selon un mode de réalisation, comme visible sur la figure 6, au moins un support 20 comprend un plateau d'accueil d'une borne de recharge interchangeable avec un plateau d'accueil comportant une structure différente permettant l'accueil d'une borne de recharge différente.

Un bénéfice est de permettre d'installer différentes catégories de bornes de recharge, c'est-à-dire des bornes de recharge présentant des caractéristiques techniques ou structurelles différentes.

Cela permet d'adapter la structure à des configurations d'usage variées.

Selon un mode de réalisation, la structure 100 est configurée pour supporter le poids d'un véhicule routier.

Cela est par exemple permis par des matériaux utilisés pour former la structure et/ou, par l'agencement relatif des composants entre eux et/ou, par les moyens d'ancrage utilisés, leur nombre et/ou leur positionnement, et/ou par les dimensions des composants.

Cela est par exemple permis par un agencement des composants et des types de composants utilisés tels que représentés sur les figures, par exemple des vis de fondations agencées dans les unités de logement, qui peuvent être multiples selon les modes de réalisation, et/ou par une typologie de support 20 utilisée, et/ou par des dimensions des composants, tels que des hauteurs des unités de logement 30, 30' et/ou du support 20, et/ou du module de liaison 40.

Ces caractéristiques, prises indépendamment ou en combinaison, permettent par exemple de limiter le risque d'arrachement de la structure en cas de choc ou de montée d'un véhicule sur la structure, par exemple lors d'une manoeuvre de déplacement dudit véhicule.

### Exemple de configurations installées de la structure 100

Plusieurs modes de réalisation sont représentés sur les figures.

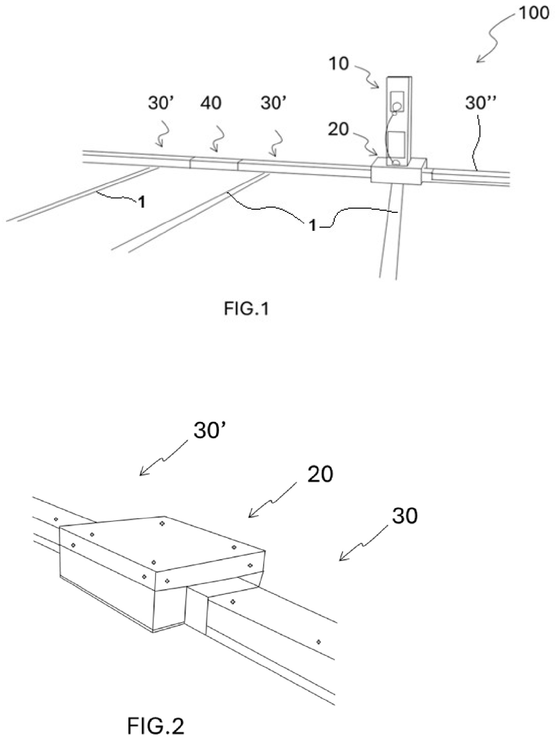

La figure 1 illustre un mode de réalisation de l'invention dans lequel la structure 100 est installée dans la configuration montée.

La structure 100 comprend un support de borne 20 installé sur un trottoir adjacent à une zone de stationnement de véhicules, ainsi qu'une borne de recharge de véhicule installée sur le support de borne 20.

Elle comprend également deux unités de logement 30' de câbles électriques, un module de liaison 40 interposé entre ces deux unités de logement 30', ainsi qu'une unité de logement 30" reliée à un support 20 de borne de recharge électrique 10.

Les unités de logements 30' et 30" sont alignées de sorte que le support s'étend suivant une configuration linéaire.

Les unités de logement 30' comprennent chacune des parois respectives dont les dimensions respectives (hauteur, longueur et largeur) sont adaptées pour permettre de loger une pluralité de câbles électriques (non représentés sur la figure 1) alimentant la borne de recharge depuis un point d'accès au réseau électrique (non représenté sur la figure 1).

Les hauteurs respectives des unités de logement 30' et du module de liaison 40 sont comprises entre cent et deux cents millimètres.

Un intérêt d'une hauteur comprise dans cet intervalle de valeurs est qu'elle est inférieure à la hauteur du trottoir adjacent aux places de stationnement de véhicule.

Cela permet de réduire le risque d'accident pour les piétons, tout en limitant le risque d'endommagement de la structure 100.

Cela permet également de réduire l'encombrement de la structure 100, et donc de faciliter le transport, le montage et le démontage.

Les largeurs respectives des unités de logement 30' et du module de liaison 40 sont comprises entre cent et deux cents millimètres.

Un intérêt d'une telle largeur est de réduire l'encombrement, tout en étant suffisante pour permettre d'assurer une bonne tenue mécanique de la structure 100, ainsi qu'une bonne résistance aux efforts.

Un autre intérêt est de ne pas gêner le stationnement des véhicules sur les places de stationnement.

Les longueurs des unités de logement 30 sont comprises entre deux mètres et trois mètres.

Un bénéfice d'une telle longueur est de permettre de couvrir une distance suffisante pour loger les câbles depuis le point d'accès au réseau électrique, tout en limitant le nombre de composants de la structure 100.

Un autre bénéfice de ces intervalles de valeurs pour les dimensions des composants de la structure 100 est de permettre de faciliter son montage, son démontage, ainsi que le remplacement des pièces ou des modifications de la configuration installée, permettant par exemple de répondre à de nouvelles contraintes d'usage.

Un autre bénéfice de ces intervalles de valeurs pour les dimensions des composants de la structure 100 est de permettre de former une butée en amont du trottoir pour le stationnement des véhicules.

Les parois respectives des unités de logement 30, ainsi que la paroi du module de liaison 40, comprennent chacune une face inférieure reposant au sol.

Des ouvertures accueillant une vis de fondation sont ménagées dans chacune des faces inférieures des parois des unités de logement 30 (non représentées sur la figure 1).

Cela permet d'améliorer la tenue mécanique de la structure 100 dans la configuration montée.

Cela permet également de limiter le risque d'endommagement de celle-ci, par exemple le risque d'arrachement causé par un choc avec un véhicule lors d'une manoeuvre de déplacement.

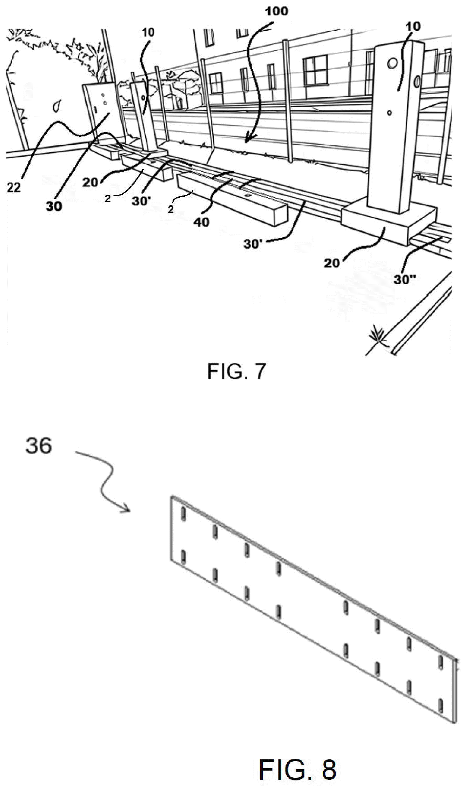

La figure 7 illustre un autre mode de réalisation de la structure 100 de l'invention.

Dans cette configuration, la structure 100 comporte une pluralité d'unités de logement adjacentes, alignées, deux unités de logement 30' étant reliées à un module de liaison 40, une unité de logement 30' et une unité de logement 30" étant reliées à un support 20 de borne électrique 21. Enfin, une unité de logement 30 et une unité de logement 31 étant reliées à un support de borne électrique 21 ; l'unité de logement 30 étant relié, à son autre extrémité à une armoire électrique 22.

Dans cette même configuration, selon un mode de réalisation, elle comprend une pluralité de moyens d'ancrage au sol adjacents, par exemple des vis de fondation adjacentes.

Dans cette même configuration, selon un mode de réalisation alternatif montré par exemple en figure 7, la structure conforme à l'invention comprend une pluralité de bornes de recharge de véhicules électrique 10 ainsi qu'une armoire électrique 22.

Sur la figure 7, la structure est mise en œuvre dans un parking situé à côté d'une route, le parking étant délimité par une clôture.

La figure 1 illustre des bandes 1 qui délimitent des places de parking tandis que la figure 7 montre que le parking comprend des plots 2 (par exemple en béton) qui sont positionnés devant la structure et qui peuvent assurer deux fonctions :
Une première fonction des plots 2 pourrait être d'indiquer visuellement le positionnement des places de parking devant la structure 100.

Une autre fonction des plots 2 est, par exemple, d'avertir le conducteur de la proximité d'une borne de rechargement lorsque la roue arrière de la voiture touche le plot 2, pour qu'il cesse de reculer ou d'avancer, la structure 100 étant alors maintenue à distance du véhicule (pour éviter la collision entre un véhicule et une borne de recharge électrique par exemple).

Pour permettre d'avertir le conducteur du bon positionnement de son véhicule par rapport à l'installation, un autre mode de réalisation de la structure conforme à l'invention est montré en figure 9 :
La figure 9 montre une structure conforme à l'invention qui comprend deux niveaux de positionnement des éléments qu'elle comprend :
- un premier niveau correspond au niveau de positionnement des bornes de recharge électrique 10 sur des support 23 d'appareil électrique. Ces support 23 sont calés et fixés sur une marche formée par la bordure 24 d'un trottoir 25 ;
- un second niveau qui correspond à un alignement d'unités de logement de câbles 30 ou 30', raccordées entre elles par des modules 40 et 41 de liaison. Ce seconde niveau d'unités a pour fonction, également, de servir de repère aux conducteur des véhicules 3 pour que ces derniers garent leur véhicule à une distance respectable des bornes 10 (pour ne pas risquer de les toucher) et toutefois minimum pour permettre le raccordement du véhicule 3 à la borne 10 au moyen d'un câble 4.

Pour assurer une mise à distance de la ligne d'unités de logement 30 des supports 23 des bornes électrique 10, les modules de liaison 41 sont associés à des conduits de raccordement 42, reliant l'intérieur du module de liaison 41 à celui du support 23 de borne 10.

Le support 23 de borne électrique est illustré en particulier en figure 11. Il comprend une base 50 qui comprend deux parties : une première partie avant fixe 51 et une seconde partie arrière 52 amovible et/ ou à position réglable par rapport à une partie supérieure 53 de support (qui reçoit la borne électrique de recharge).

Sur le mode de réalisation illustré en figure 9, on observe que seule la partie fixe 51 de la base du support est visible : elle est positionnée contre la bordure 24 du trottoir. La partie arrière amovible 52 de la base a été complètement retirée pour que le support 23 vienne épouser l'épaulement formée par la bordure 24.

Deux systèmes 54 de fixation comportant une tête pouvant coulisser dans un trou oblong, relient la partie supérieure 53 du support 23 et la partie arrière 52, permettant à la partie arrière de se positionner en hauteur par rapport à la partie supérieure 53, ce qui permet par exemple de positionner le support 23 sur des terrains présentant différents niveaux. La modularité des unités de logement 30 des modules de liaison 40 ou 41 et des supports 20 ou 23 est notamment de permettre d'adapter la configuration de la structure 100 à une configuration dans laquelle un nombre important de câbles électriques sont acheminés depuis au moins un point d'accès au réseau électrique.

La figure 10 illustre un homme en train de monter une structure conforme à l'invention dans un espace extérieur, afin de l'organiser en station de recharge / parking équipé de bornes de recharge électriques.

L'espace extérieur comprend déjà des bandes 1 délimitant des places de parking.

Des supports 20 de bornes de recharge sont illustrées en étant encore logés dans leur emballage.

Des unités de logement 30, toutes sensiblement de même longueur, sont positionnées en étant sensiblement alignées sur des places de parking adjacentes.

On observe que l'homme est en train de fixer au sol une unité de logement 30 positionnée à l'extrémité d'une place de parking.

A l'extrémité de l'unité de logement 30, un module de liaison 40 est positionné au sol, à disposition, pour accueillir l'extrémité de l'unité de logement 30 et régler sa longueur d'introduction dans le module de liaison 40.

Deux pièces de sécurisation et d'ancrage 36 sont également disposées au sol pour être utilisées afin de fixer d'autres unités de logement 30, et plus particulièrement un ensemble d'ancrage 32 à une unité de logement 30.

La figure 12 illustre encore un autre accessoire de la structure conforme à l'invention : cet accessoire permet de raccorder deux éléments de la structure qui se trouveraient également à deux niveaux différents.

On observe ainsi, sur la figure 12, une extrémité d'unité de logement 30 positionné sur un sol de niveau A, un conduit 42 pouvant accueillir des câbles positionné sur un sol de niveau B, différent du niveau A (par exemple situé un peu plus haut), ainsi qu'un élément 60, de raccordement, permettant de raccorder l'unité de logement situé au niveau A avec le conduit 42 situé au niveau B.

L'élément de raccordement 60 comprend une base de raccordement 61 apte à accueillir au moins une partie de l'unité de logement 30, qui présente une ouverture s'ouvrant au niveau A. Il comprend également un boitier 62, qui communique avec la base de raccordement 61 (pour permettre le passage de câbles notamment) et qui comprend une ouverture apte à accueillir un conduit 42, l'ouverture s'ouvrant au niveau B, supérieur au niveau d'ouverture de la base 61 avec laquelle elle communique.

Le boitier 62 comprend une partie 63 formant couvercle qui est articulé au moins partiellement sur les parois latérales du boitier 62, pour permettre de régler l'inclinaison de la partie supérieure du boitier 62 et agrandir plus ou moins l'ouverture du boitier accueillant le conduit 42.

L'articulation 64 peut être une came/ une tête de pièce mobile dans une lumière oblongue, la came étant reliée à la partie supérieure du boitier 62 et la lumière oblongue étant prévue sur une paroi latérale du boitier, ou inversement.

Les modes de réalisation décrits dans la présente description ne sont pas limitatifs de l'invention.

A la lumière de la description, on comprend que l'invention concerne une structure hautement modulaire, facilement démontable et reconfigurable, même après que cette structure ait été installée, présentant une grande stabilité et une résistance importante aux efforts extérieurs, offrant également une protection avancée de l'installation électrique et des moyens d'accès facilités aux câbles alimentant une ou plusieurs bornes de recharge, ce qui permet également de faciliter la maintenance, le tirage des câbles, la reconfiguration de l'installation, mécanique ou électrique.

## Revendications

1. Structure (100) modulable et démontable, comportant :
• au moins un support (20) étant configuré pour supporter au moins un équipement électrique, ledit équipement électrique étant une borne électrique ou une armoire électrique ;
• au moins une unité de logement (30) et au moins une unité de logement additionnelle (30') configurées pour loger au moins partiellement une pluralité de câbles destinés à alimenter l'équipement électrique en électricité, ladite au moins une unité de logement (30) ou ladite au moins une unité de logement additionnelle (30') étant configurée pour être reliée mécaniquement au support (20) ;
• au moins un module de liaison (40) configuré pour loger au moins partiellement ladite pluralité de câbles électriques, et configuré pour être interposé entre ladite au moins une unités de logement (30) et ladite au moins une unité de logement additionnelle (30') ;
ladite structure (100) étant démontable, **caractérisée en ce que** ledit module de liaison comprend une paroi délimitant un volume au sein duquel les câbles électriques peuvent êtres agencés, lesdites au moins une unité de logement (30) et une unité de logement additionnelle (30') comportant chacune au moins une extrémité (E₁, E_{1'}) apte à coopérer mécaniquement avec le module de liaison (40), ladite au moins une unité de logement (30) ou ladite au moins une unité de logement additionnelle (30') étant configurées pour coulisser à l'intérieur du module de liaison (40), ledit module de liaison (40) pouvant ainsi être déplacé d'une première position dans laquelle une distance entre lesdites extrémités (E₁, E_{1'}) est minimale vers une deuxième position dans laquelle une distance entre lesdites extrémités (E₁, E_{1'}) est maximale, et être déplacé de la deuxième position vers la première position, pour adapter la longueur de ladite au moins une unité de logement (30) ou de ladite au moins une unité de logement additionnelle (30') en fonction du cas d'usage.

2. Structure (100) selon la revendication 1, **caractérisée en ce qu'**elle comporte en outre un ensemble d'ancrage (32) comportant au moins un élément d'ancrage de la structure sur un support, au moins une unité de logement (30) et/ou le support de borne (20) comportant en outre au moins un logement apte à coopérer avec ledit élément d'ancrage.

3. Structure (100) selon l'une quelconque des revendications précédentes, **caractérisée en ce qu'**elle comporte au moins une pièce de réglage (36) de l'agencement relatif d'au moins une unité de logement (30) par rapport au module de liaison (40).

4. Structure (100) selon l'une quelconque des revendications précédentes, **caractérisée en ce qu'**elle comporte au moins une pièce de rattrapage de niveau configurée pour permettre d'ajuster le niveau de la structure (100) par rapport à un support sur lequel repose au moins partiellement ladite structure (100) dans la configuration montée.

5. Structure (100) selon l'une quelconque des revendications précédentes, **caractérisée en ce qu'**elle comporte un ensemble de protection (33) comportant au moins une pièce amovible d'accès à la pluralité de câbles électriques.

6. Structure (100) selon la revendication 5, **caractérisée en ce que** l'ensemble de protection (33) comporte des moyens de verrouillage de la pièce amovible d'accès à la pluralité de câbles électriques.

7. Structure (100) selon l'une quelconque des revendications précédentes, **caractérisée en ce qu'**elle comporte au moins deux modules de liaison (40, 40'), et **en ce qu'**elle comporte en outre au moins trois unités de logement (30, 30', 30"), la structure (100) étant apte à être installée dans une configuration montée dans laquelle un premier module de liaison (40) est interposé entre une première unité de logement (30) et une deuxième unité de logement additionnelle (30'), et dans laquelle un deuxième module de liaison (40') est interposé entre la deuxième unité de logement additionnelle (30') et une troisième unité de logement (30").

8. Structure (100) selon l'une quelconque des revendications précédentes, **caractérisée en ce que** le support d'un équipement électrique est un support d'une borne de recharge ou d'une armoire électrique, et comprend en outre un plateau de support interchangeable avec un autre plateau de support adapté pour supporter un équipement électrique différent.

9. Structure (100) selon l'une quelconque des revendications précédentes, **caractérisée en ce qu'**au moins une unité de logement (30) et ladite au moins une unité de logement additionnelle (30') et/ou le module de liaison (40) comprend un guide de la pluralité de câbles électriques, et comporte en outre un organe de séparation des câbles de courants faible des câbles de puissance.

10. Structure (100) selon l'une quelconque des revendications précédentes, **caractérisée en ce que** ladite unité de logement (30) ou ladite unité de logement additionnelle (30') comprend au moins une ouverture, ménagée sur une ou plusieurs parois que chacune comprend, pour permettre notamment de faire entrer les câbles électriques au sein d'un volume délimité dans ladite unité de logement (30) ou dans ladite unité de logement additionnelle (30') ou pour permettre une manutention.

11. Structure (100) selon l'une quelconque des revendications précédentes, **caractérisée en ce que** les unités de logements (30, 30', 30") associées au module de liaison (40, 41) forment une ligne d'éléments, apte à servir de repère de contact pour positionner à distance un véhicule dudit équipement électrique (10) porté par ledit au moins un support (20, 23), ladite structure comprenant au moins un élément de raccordement (42) de ladite ligne d'éléments audit au moins un support (20, 23) d'équipement électrique, ledit élément de raccordement (42) positionnant à distance ladite ligne d'éléments dudit au moins un support (20, 23) et étant notamment un conduit de raccordement.

12. Structure (100) selon l'une quelconque des revendications précédentes, **caractérisée en ce que** le support (20) est configuré pour supporter au moins deux bornes de recharge de véhicules électriques.

13. Structure (100) selon l'une quelconques des revendications précédentes, **caractérisée en ce que** le support (20) comprend une pluralité d'ouvertures de passage de câbles, lesdites ouvertures étant agencés sur des faces adjacentes du support.

14. Structure (100) selon l'une quelconque des revendications précédentes, **caractérisée en ce que** ledit support comprend une base (50) comprenant une partie fixe (51) et/ou une partie amovible (52) et ou montée mobile sur une partie supérieure (53) de support, de manière à permettre un rattrapage de niveau du sol.

15. Structure (100) selon l'une quelconque des revendications précédentes, **caractérisée en ce qu'**elle comporte un élément de raccordement (60) qui comprend une ouverture s'ouvrant à un premier niveau (A), une seconde ouverture s'ouvrant à un second niveau (B), différent dudit premier niveau (A), ladite première ouverture étant apte à se raccorder à un élément de premier niveau (A) et ladite seconde ouverture étant apte à se raccorder à un élément de second niveau (B) , de manière à permettre un rattrapage de niveau du sol.
